# EUROPEAN PATENT APPLICATION

(11) **EP 2 398 151 A1**
(43) Date of publication of application: **21.12.2011**
(21) Application number: 10166605.5
(22) Date of filing: 21.06.2010
(51) Int. Cl.: H04B 1/10, H04B 1/30, H04B 1/00

(54) **Radio receiver apparatus and method for operating the apparatus**

(71) Applicant: NXP B.V., 5656 AG Eindhoven (NL)
(72) Inventor: Caldwell, Richard John, 5656 AE, Eindhoven (NL); Fifield, Robert, 5656 AE, Eindhoven (NL)
(74) Representative: Schouten, Marcus Maria

(57) **Abstract**

A radio receiver apparatus (100) comprises an analog processing section (102) for receiving and processing radio frequency signals from an antenna (101), an analog-to-digital converter (104) for converting received radio frequency signals outputted by the analog processing section (102) into digital data, and a digital processing section (105, 106) for digital processing of the digital data provided by the analog-to-digital converter (104), wherein the apparatus (100) is configured to detect in case of receiving an interfering signal in the vicinity of a wanted signal the frequency position of the interfering signal within the received frequency spectrum and to shift at least partly the received frequency spectrum including the detected interfering signal such that the frequency position of the interfering signal is approximately coincident with the frequency position of a presetted spectral hole inserted in the received frequency spectrum by a DC blocking element (103). The digital signal processing section (105) calculates in case of detecting an interfering signal the spectral spacing between the detected position of the interfering signal and the position of the presetted position of the spectral hole and triggers a frequency shift of the detected interfering signal by tuning a local oscillator provided in the analog processing section (102) via a control line (105') in dependence of the calculated frequency spacing. When a complex sigma-delta ADC is used the digital signal processing section (105) further transmits a recalculated intermediate frequency on the basis of the changed local oscillator frequency to the complex sigma-delta ADC (104) via a control line (105'') and shifts the noise spectrum of the ADC (104) such that the position of the wanted signal is locked within a local noise minimum of the ADC. The wanted signal is demodulated in the demodulator (106) coupled to the digital signal processing section (105).

## Description

### FIELD OF THE INVENTION

The present invention relates in general to a radio receiver apparatus and a method for operating the apparatus.

In such radio receiver apparatuses a RF (radio frequency) frontend is used to process analog RF signals input by an antenna, wherein the analog processing includes filtering, amplifying and mixing down of the signals to an intermediate frequency, and an anlog-to-digital converter is used to convert the analog signals output by the RF frontend into digital data signals which are subsequently processed in a digital section of the apparatus. Due to this property of digital processing such apparatus has an application in digital communication systems as multi-mode/standard radio receivers.

### BACKGROUND OF THE INVENTION

US 2006/0058001 A1 discloses a radio receiver apparatus for receiving and processing radio frequency signals, wherein the radio frequency signals received by an antenna are processed in an analog processing section. i.e. the signals are filtered by several filter stages, amplified by a low noise amplifier stage and mixed down by mixer stages supplied with a local oscillator signal. The processed signals are digitized by sigma-delta analog-to-digital converters (ADC) into digital bitstreams. Possible interfering signals contained in the digital bitstreams are removed by subsequent digital channel filters. Subsequently, the digital signals are decoded in a decoder and further digitally processed to generate audio signals. Since in such apparatus strong interfering signals are often present in the receiver chain and the converter input signal consists of wanted signals as well as interfering signals, these signals determine the required dynamic range of the ADC and the amount of filtering effort to remove interfering signals. Hence, in this type of apparatus a considerable amount of filtering effort due to several filter stages results in an increased power consumption.

### SUMMARY OF THE INVENTION

Accordingly, it is one object of the present invention to provide a radio receiver apparatus which allows the removal or at least the reduction of strong interfering signals with a minimum of filtering effort such that the resulting power consumption is minimized.

The object is achieved by the radio receiver apparatus according to claim 1.

Accordingly, the radio receiver apparatus comprises an analog processing section for receiving and processing radio frequency signals from an antenna, an analog-to-digital converter for converting received radio frequency signals output by the analog processing section into digital data, and a digital processing section for digital processing of the digital data provided by the analog-to-digital converter, wherein the apparatus is configured to detect in case of receiving an interfering signal in the vicinity of a wanted signal the frequency position of the interfering signal within the received frequency spectrum and to shift at least partly the received frequency spectrum including the detected interfering signal such that the frequency position of the interfering signal is approximately coincident with the frequency position of a pre-set spectral hole inserted in the received frequency spectrum. On the basis of a detection and, hence, a localisation of an interfering signal the apparatus performs a frequency shifting of the spectrum, wherein the opposite effects of a negative amplitude of the spectral hole and the positive amplitude of the interfering signal shifted to the pre-set spectral position result in an attenuation or a removal of the interfering signal within the frequency spectrum. In comparison with an unshifted spectrum, where a strong interfering signal can dominate the amplitude range of the spectrum and thus, can determine the dynamic amplitude range of the ADC, the shifted spectrum has a lower dynamic amplitude range such that now the amplitude of the wanted signal can determine the dynamic range of the ADC without saturating it. Hence, the filtering effort in this apparatus is limited resulting in a low power consumption which is particularly advantageous in the case when the apparatus is used as portable battery-powered receiver.

In an embodiment, the apparatus comprises a DC blocking element for producing a spectral hole, wherein the DC blocking element is coupled to an input signal port of the analog-to-digital converter. Since the DC blocking element is coupled between the analog processing section and the ADC, the DC blocking element inserts a spectral hole at DC, i.e. a DC notch, in the frequency spectrum, before the signals enter the input port of the ADC.

In a relatively simple embodiment, the DC blocking element comprises a capacitor, wherein the capacitor is connected between the ADC and the analog processing section and causes a DC notch in the spectrum passing through.

In an embodiment the analog-to-digital converter is configured as a sigma-delta analog-to-digital converter which enables high-speed, excellent linearity, precise processing and the generation of bitstreams.

In an embodiment the sigma-delta analog-to-digital converter operates as a complex sigma-delta analog-to-digital converter which has the advantage to use the noise shaping property of the sigma-delta ADC. Furthermore, in-phase and quadrature components of the wanted can be easily processed.

In an embodiment a digital signal processor is provided, to process bitstreams output from the analog-to-digital converter, wherein the digital signal processor comprises a signal sensing element for localizing the frequency position of the interfering signal within the received frequency spectrum. Thus, the digital signal processor performs several tasks within the apparatus: it processes the incoming bitstreams from the ADC, detects and localizes an interfering signal, calculates the spectral spacing between interfering signal and spectral hole, calculates on that basis the local oscillator frequency and, hence, the intermediate frequency required for shifting the frequency spectrum correspondingly, and changes the local oscillator frequency in the analog processing section to perform that frequency shift.

In an embodiment the digital signal processor calculates in case of detecting an interfering signal the spectral spacing between the detected position of the interfering signal and the position of the pre-set position of the spectral hole and triggers a frequency shift of the detected interfering signal by tuning a local oscillator provided in the analog processing section via a control line in dependence of the calculated frequency spacing.

In an embodiment the digital signal processor further transmits a readjusted intermediate frequency to the complex configured sigma-delta analog-to-digital converter via a control line and shifts the noise spectrum of the analog-to-digital converter such that the position of the wanted signal is locked within a local noise minimum of the analog-to-digital converter. By shaping the noise spectrum of the sigma-delta ADC such that the wanted signal is located within a local noise minimum, the wanted signal is preserved in a favourable detection and processing state.

In a preferred embodiment the digital signal processor comprises a signal sensing element for detecting interfering signals which has the advantage that the digital signal processor can handle a variety of tasks including measuring, calculating and controlling.

In an embodiment a demodulator is coupled to the output of the digital signal processor to enable the demodulation of the wanted signal.

The object is further achieved by a method for operating the radio receiver apparatus according to claim 11.

Accordingly, the method comprises: receiving and processing incoming radio frequency signals within the received frequency spectrum; inserting a spectral hole at a predetermined frequency position in the received frequency spectrum; digitizing processed frequency spectrum including signals; detecting an interfering signal in relation to a wanted signal within the received spectrum; measuring the frequency spacing between interfering signal and position of spectral hole inserted in the spectrum; shifting the frequency spectrum including the detected interfering signal such that the detected interfering signal is approximately coincident with the pre-set frequency position of the spectral hole inserted in the frequency spectrum. An effective method is thus achieved which limits the filtering effort and the power consumption in the apparatus.

In an embodiment of the method according to the present invention in a first run the received frequency spectrum is processed in the analog processing section at a predetermined local oscillator frequency, is further digitized, and the detecting step is performed on the digitized signal data in the digital signal processor and in a second run the digital signal processor changes the predetermined local oscillator frequency in the analog processing section on the basis of measured frequency spacing between interfering signal and position of spectral hole enabling a certain frequency shift of the received frequency spectrum with a subsequent inserting step of the pre-set spectral hole followed by digitizing the shifted frequency spectrum. Therefore, in the first run the unshifted spectrum passes through the receiver chain of the apparatus and on detection of a interfering signal the second run is performed with the shifted spectrum in accordance with the changed local oscillator frequency by means of a feedback of the digital signal processor to the local oscillator implemented in the analog processing section.

The basic idea of the invention resides in that the apparatus is configured to detect in case of receiving an interfering signal in the vicinity of a wanted signal the frequency position of the interfering signal within the received frequency spectrum and to shift at least partly the received frequency spectrum including the detected interfering signal such that the frequency position of the interfering signal is approximately coincident with the frequency position of a pre-set spectral hole inserted in the received frequency spectrum by a DC blocking element.

Preferred embodiments and further developments of the invention are defined in the dependent claims of the independent claims. It shall be understood that the apparatus and the method of the invention have similar and/or identical preferred embodiments and advantages.

### BRIEF DESCRIPTION OF THE DRAWINGS

These and other aspects of the invention will be apparent from and elucidated with reference to the embodiment(s) described hereinafter. In the following drawings, the figures are schematically drawn and not true to scale, and identical reference numerals in different figures, if any, may refer to corresponding elements. It will be clear for those skilled in the art that alternative but equivalent embodiments of the invention are possible without deviating from the true inventive concept, and that the scope of the invention is limited by the claims only.

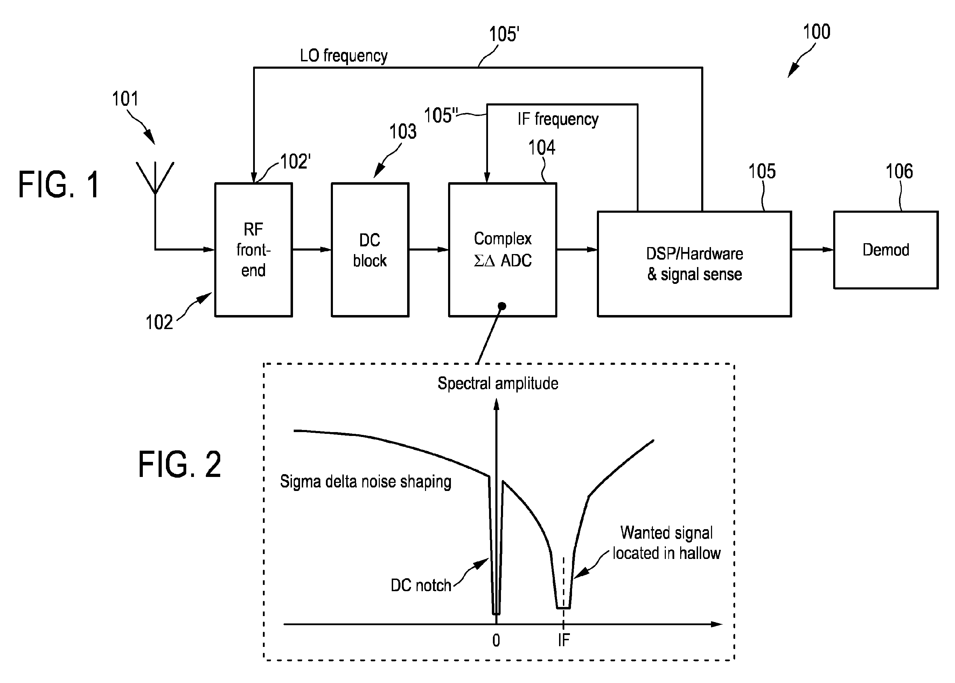

Fig. 1 illustrates a block diagram of a radio receiver apparatus according to the invention comprising an antenna, a RF frontend, a DC blocking element, a sigma-delta analog-to-digital converter, a digital signal processor, and a demodulator;
Fig. 2 shows a graph illustrating the frequency spectrum including the spectral noise shaping of the sigma-delta analog-to-digital converter according to the radio receiver apparatus of Fig. 1 without the presence of an interfering signal, wherein the amplitude is plotted against the frequency;

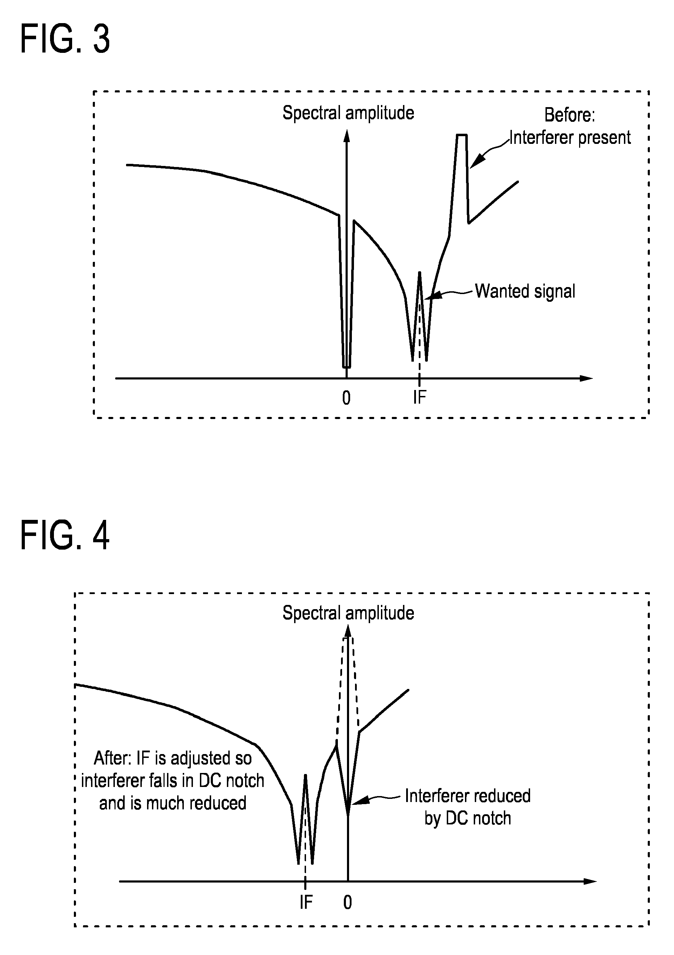

Fig. 3 shows a graph illustrating the frequency spectrum including the spectral noise shaping of the sigma-delta analog-to-digital converter according to the radio receiver apparatus with a strong interfering signal in the vicinity of the wanted signal, wherein the amplitude is plotted against the frequency;
Fig. 4 shows a graph illustrating the frequency spectrum including the spectral noise of the sigma-delta analog-to-digital converter when the frequency spectrum is shifted such that the shifted spectral position of the localized interfering signal is coincident with the spectral position of the DC notch inserted in the spectrum, wherein the amplitude is plotted against the frequency.

### DETAILED DESCRIPTION OF EMBODIMENTS

Fig. 1 illustrates a schematic block diagram of a radio receiver apparatus 100 according to the invention comprising an antenna 101, a RF (radio frequency) frontend 102, a DC blocking element 103, a complex sigma-delta analog-to-digital converter (ADC) 104, a digital signal processor (DSP) 105 including signal sensing means, and a demodulator 106. Radio signals received by the antenna 101 are processed by the RF frontend 102, wherein the signals are filtered, amplified and mixed down with a local oscillator (LO) frequency supplied at a respective port 102' to an intermediate frequency (IF). The processed signal is then passed through the DC blocking element 103 which causes a DC notch in the frequency characteristics of the received and processed signal. The function of the DC blocking element 103 can be realized by a capacitor. Thereafter, a sigma-delta analog-to-digital converter (ADC) 104 converts the incoming analog signal from the DC blocking element 103 to an digital bitstream which is output to a digital signal processor (DSP) 105. The DSP 105 is adapted to process the digital bitstream and to output it with the wanted signal being de-rotated down to zero-IF to the demodulator 107, wherein the bitstream is demodulated to generate audio signals. Furthermore, the DSP 105 comprises a control signal line 105' coupled to the RF frontend 102 enabling the DSP to tune the local oscillator (LO) frequency of the local oscillator of a mixer (not shown) in the frontend 102 and the resulting intermediate frequency (IF) of the mixer. An additional control line 105" coupling the DSP 105 to the ADC 104 enables the DSP 105 to transmit the intermediate frequency to the ADC 104.

Fig. 2 shows the amplitude versus frequency characteristics of a representative frequency spectrum including the noise spectrum of the sigma-delta ADC 104 illustrating the inventive method. Here, for the sake of simplicity the noise shaping spectrum of the ADC 104 is depicted without the presence of interfering signals. The local minimum of the noise generated by the ADC 104 is preserved for the detection of the wanted signal by adjusting the local oscillator (LO) frequency in the RF frontend block 102. The DC blocking element 103 causes a DC notch in the noise frequency characteristics on the lower frequency side at zero frequency.

Fig. 3 shows the frequency spectrum including the noise spectrum of the sigma-delta ADC 104 in the case when a strong interfering signal is present in the receiver chain of apparatus 100. Here, the wanted signal is fixed within the low noise minimum of the frequency characteristics by suitably adjusting the local oscillator (LO) frequency in the RF frontend 102 and appears as a sharp positive amplitude peak within the local noise minimum of the spectrum at the chosen IF (intermediate frequency) position. The presence of the strong interfering signal in the frequency vicinity of the wanted signal (the interfering signal lies on the high-frequency side of the wanted signal) is marked by a large and saturated signal amplitude which exceeds the dynamic range of the ADC 104. The DC notch caused by the DC blocking element 103 appears on the lower frequency side at zero frequency.

Fig. 4 shows the frequency spectrum including the noise spectrum as output by the sigma-delta ADC 104 after completion of a frequency shift, i.e. in the case when the signal of the strong interferer (shown in Fig. 3) is reduced by the method according to the present invention. Here, the spectral position of the interfering signal is determined by a signal sensing element which is incorporated in the DSP 105. Then, the local oscillator (LO) frequency and the IF frequency of the complex sigma-delta ADC 104 is adjusted such that the spectral position i.e. frequency position of the interfering signal coincides with the position of the DC notch. Since in this case the negative gain ?? of the DC notch compensates the large amplitude of the peak of the interferer signal, the interfering signal is removed or at least reduced in amplitude. As a result, the range of the spectral amplitude of the spectrum obtained by the ADC 104 is reduced in comparison with the case of the spectrum of Fig. 3. Hence, the ADC's dynamic range is sufficient to read the signals without going in saturation.

The inventive method for operating the radio receiver apparatus 100 works as follows: In a first run the received frequency spectrum is processed in the RF frontend 102 at a predetermined local oscillator frequency. The DC blocking element 103 inserts a DC notch, i.e. a spectral hole, in the spectrum at DC. Then, the signals of the spectrum are digitized in the ADC 104 and processed in the DSP 105. The detecting is performed on the digitized data stream in the DSP 105. If the DSP 105 detects an interfering signal in the digitized signal data, it initiates a second run, wherein the detected interfering signal is localized, calculates the spectral spacing Δf between the detected position of the interfering signal and the position of the pre-set position of the spectral hole and triggers a frequency shift of the detected interfering signal by tuning the local oscillator frequency of the local oscillator provided in the RF frontend 102 via the control line 105' in dependence of the calculated frequency spacing Δf. Now, during the second run the frequency spectrum is shifted, as Fig. 4 illustrates, wherein the negative amplitude of the spectral hole, i.e. DC notch, compensates for the opposite effect of the positive amplitude of the interfering signal. During the passage of the shifted frequency through the DC blocking element 103 a DC notch is inserted in the shifted spectrum at DC. The DC notch is therefore also suitable as a frequency calibration mark. Then, the shifted spectrum with the inserted DC notch is digitized in the ADC. When a complex sigma-delta ADC is used the digital signal processor 105 further transmits during the second run the recalculated intermediate frequency (IF) on the basis of the changed local oscillator (LO) frequency to the complex sigma-delta ADC 104 via the control line 105 " and shifts the noise spectrum of the ADC such that the position of the wanted signal is locked within a local noise minimum of the ADC making thus use of noise shaping of the sigma-delta ADC. The second run is completed when the shifted spectrum is further processed in the DSP to derotate to wanted signal to zero-IF and to demodulate the wanted signal in the demodulator 106.

Summarizing, the radio receiver apparatus 100 according to the present invention comprises an RF frontend 102 for receiving and processing radio frequency signals from an antenna 101, a sigma-delta analog-to-digital converter 104 for converting received radio frequency signals output by the RF frontend 102 into digital data, and a digital processing section 105, 106 for digital processing of the digital data provided by the analog-to-digital converter 104, wherein the apparatus 100 is configured to detect in case of receiving an interfering signal in the vicinity of a wanted signal the frequency position of the interfering signal within the received frequency spectrum and to shift at least partly the received frequency spectrum including the detected interfering signal such that the frequency position of the interfering signal is approximately coincident with the frequency position of a pre-set spectral hole inserted in the received frequency spectrum by a DC blocking element 103. The digital signal processor 105 calculates in case of detecting an interfering signal the spectral spacing Δf between the detected position of the interfering signal and the position of the pre-set position of the spectral hole and triggers a frequency shift of the detected interfering signal by tuning a local oscillator (LO) provided in the RF frontend 102 via a control line 105' in dependence of the calculated frequency spacing Δf. When a complex sigma-delta ADC is used the digital signal processor 105 further transmits a recalculated intermediate frequency on the basis of the changed local oscillator frequency to the complex sigma-delta ADC 104 via a control line 105" and shifts the noise spectrum of the ADC 104 such that the position of the wanted signal is locked within a local noise minimum of the ADC. The wanted signal is demodulated in the demodulator 106 coupled to the digital signal processing section 105.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art in practicing the claimed invention, from a study of the drawings, the disclosure, and the appended claims. In the claims, the word "comprising" does not exclude other elements or steps, and the indefinite article "a" or "an" does not exclude a plurality. A single means or other unit may fulfil the functions of several items recited in the claims. The mere fact that certain measures are recited in mutually different dependent claims does not indicate that a combination of these measured cannot be used to advantage. Any reference signs in the claims should not be construed as limiting the scope.

## Claims

1. A radio receiver apparatus (100) comprising: an analog processing section (102) for receiving and processing radio frequency signals from an antenna (101), an analog-to-digital converter (104) for converting received radio frequency signals output by the analog processing section (102) into digital data, and a digital processing section (105, 106) for digital processing of the digital data provided by the analog-to-digital converter (104); wherein the apparatus (100) is configured to detect in case of receiving an interfering signal in the vicinity of a wanted signal the frequency position of the interfering signal within the received frequency spectrum and to shift at least partly the received frequency spectrum including the detected interfering signal such that the frequency position of the interfering signal is approximately coincident with the frequency position of a presetted spectral hole inserted in the received frequency spectrum.

2. A radio receiver apparatus according to claim 1, wherein the apparatus (100) comprises a DC blocking element (103) for producing a spectral hole, wherein the DC blocking element is coupled to an input signal port of the analog-to-digital converter (104).

3. A radio receiver apparatus according to claim 2, wherein the DC blocking element (103) comprises a capacitor.

4. A radio receiver apparatus according to claim 1 to 3, wherein the analog-to-digital converter (104) is configured as a sigma-delta analog-to-digital converter.

5. A radio receiver apparatus according to claim 4, wherein the sigma-delta analog-to-digital converter (104) operates as a complex sigma-delta analog-to-digital converter.

6. A radio receiver apparatus according to claim 1 to 5, wherein a digital signal processor (105) is provided, to process bitstreams output from the analog-to-digital converter, wherein the digital signal processor comprises a signal sensing element for localizing the frequency position of the interfering signal within the received frequency spectrum.

7. A radio receiver apparatus according to claim 6, wherein the digital signal processor (105) calculates in case of detecting an interfering signal the spectral spacing between the detected position of the interfering signal and the position of the presetted position of the spectral hole and triggers a frequency shift of the detected interfering signal by tuning a local oscillator provided in the analog processing section (102) via a control line (105') in dependence of the calculated frequency spacing.

8. A radio receiver apparatus according to claim 7, wherein the digital signal processor (105) further transmits a readjusted intermediate frequency to the complex configured sigma-delta analog-to-digital converter (104) via a control line (105 ") and shifts the noise spectrum of the analog-to-digital converter (104) such that the position of the wanted signal is locked within a local noise minimum of the analog-to-digital converter.

9. A radio receiver apparatus according to claims 4 to 8, wherein the digital signal processor (105) comprises a signal sensing element for detecting interfering signals.

10. A radio receiver apparatus according to claims 6 to 9, wherein a demodulator (106) is coupled to the output of the digital signal processor (105).

11. A method for operating the radio receiver apparatus (100) according to claims 1 to 10, comprising the following steps:
- receiving and processing incoming radio frequency signals within the received frequency spectrum;
- inserting a spectral hole at a presetted frequency position in the received frequency spectrum;
- digitizing processed frequency spectrum including signals;
- detecting an interfering signal in relation to a wanted signal within the received spectrum;
- measuring the frequency spacing between interfering signal and position of spectral hole inserted in the spectrum;
- shifting the frequency spectrum including the detected interfering signal such that the detected interfering signal is approximately coincident with the presetted frequency position of the spectral hole inserted in the frequency spectrum.

12. A method according to claim 11, wherein in a first run the received frequency spectrum is processed in the analog processing section (102) at a predetermined local oscillator frequency, is further digitized, and the detecting step is performed on the digitized signal data in the digital signal processor (105) and in a second run the digital signal processor (105) changes the predetermined local oscillator frequency in the analog processing section (102) on the basis of measured frequency spacing between interfering signal and position of spectral hole enabling a certain frequency shift of the received frequency spectrum with a subsequent inserting step of the presetted spectral hole followed by digitizing the shifted frequency spectrum.

13. A method according to claim 12, wherein in the second run the digital signal processor (105) further transmits a tuned intermediate frequency on the basis of the readjusted local oscillator frequency to the analog-to-digital converter (104) enabling a certain frequency shift of the noise spectrum of the analog-to-digital converter such that the wanted signal is locked within a local noise minimum of the analog-to-digital converter (104).

14. A method according to claims 11 to 13, wherein the inserting step is performed by a DC blocking element (103).
